# EUROPÄISCHE PATENTSCHRIFT

(11) **EP 3 519 890 B1**
(45) Veröffentlichungstag und Bekanntmachung des Hinweises auf die Patenterteilung: **17.03.2021**
(21) Anmeldenummer: 17791005.6
(22) Anmeldetag: 16.10.2017
(51) Int. Cl.: G02B 7/14, G02B 23/16, G03B 5/02, G03B 17/14, G02B 7/02

(54) **ADAPTEREINRICHTUNG UND KAMERAOBJEKTIV**
ADAPTER DEVICE AND CAMERA LENS
DISPOSITIF D'ADAPTATION ET OBJECTIF DE CAMÉRA

(30) Priorität: 18.10.2016 DE 102016220370
(43) Veröffentlichungstag der Anmeldung: 07.08.2019
(73) Patentinhaber: Carl Zeiss AG, 73447 Oberkochen (DE)
(72) Erfinder: WEBER, Uwe, 73432 Aalen (DE)
(74) Vertreter: Glawe, Delfs, Moll
(86) Internationale Anmeldenummer: PCT/EP2017/076330
(87) Internationale Veröffentlichungsnummer: WO 2018/073167

(56) Entgegenhaltungen:
- CH-A- 320 401
- Anonymous: "Zwischenringe für Makrofotografie für Canon: Amazon.de: Kamera", , 1. Oktober 2007 (2007-10-01), XP055439414, Gefunden im Internet: URL:https://www.amazon.de/dp/B000WH1ZKK/re f=cm_sw_em_r_mt_dp_U_8rCvAbRPYGHFE [gefunden am 2018-01-10]

## Beschreibung

Die Erfindung betrifft eine Adaptereinrichtung und ein Kamaraobjektiv.

Bei optischen Systemen, bei denen Objektive über eine Schnittstelle an eine Kamera angesetzt werden, kommt es häufig vor, dass die Lage der objektivseitigen und/oder kameraseitigen Schnittstelle zur Bildebene für das gesamte abbildende System nicht genau genug ist, und damit nicht die optimale Abbildungsleistung erreicht werden kann.

Als Schnittstelle kann beispielsweise ein Bajonett, Gewinde, Flanschung, o.ä. vorgesehen sein. Diese Schnittstelle wird üblicherweise als Mount oder Anschluss bezeichnet. Die Schnittstelle umfasst dabei an der Kamera einen Kameraanschluss, auch Kameramount genannt, und an dem Objektiv einen Objektivanschluss, auch Objektivmount genannt.

Das Anlagemaß ist der Abstand der Fläche, an der Objektivmount und Kameramount aufeinandertreffen, zur Bildebene. Diese Fläche gibt es nur einmal, sie gehört somit sowohl dem Objektiv, als auch der Kamera. Allerdings kann der Abstand des Sensors (früher des Films) aufgrund von Bauteiltoleranzen oder Montagefehlern fehlerhaft sein. Das ist dann der Fehler der Kamera. Aber auch das Objektiv kann diesbezüglich fehlerhaft sein, wenn die Optik aufgrund von Bauteiltoleranzen oder Montagefehlern nicht dort liegt, wo sie idealerweise sein sollte. Ein Backfocus-Mechanismus ist in der Lage, die Summe aller dieser Fehler zu kompensieren.

Problematisch sind beispielsweise zu große Toleranzen bei den Kameragehäusen, die dazu führen, dass auch bei gleicher Kameraserie das Anlagemaß, also der Abstand von einer kameraseitigen Anlagefläche des Mounts eines Objektivs zu einer Bildebene der Kamera schwankt. Bereits eine Differenz von 0,2 mm oder weniger im Abstand zwischen Kamerasensor und Objektivanlagefläche an die Kamera kann zu unscharfen Bildern führen.

Häufig wird dann objektivseitig eine Abstimmung mit Scheiben, auch Shims genannt, vorgenommen, um den Fehler zu korrigieren. Das hat aber den Nachteil, dass dies nicht unter Beobachtung erfolgen kann, da hierzu das Objektiv von der Kamera genommen und der Objektivmount demontiert, die Scheiben getauscht und der Objektivmount dann wieder montiert werden muss. Zudem erfolgt die Abstimmung hier nur in der Stufung der zur Verfügung stehenden Scheiben. Eine solche Vorrichtung ist beispielsweise in DE102011010783 A1 offenbart.

Besser sind hier Backfocus-Mechanismen, die eine stufenlose Verstellung unter Beobachtung ermöglichen, wie in DE10315123 A1 offenbart. Allerdings ist dieser Aufbau sehr aufwändig hinsichtlich Teilezahl, Baugröße und somit auch Kosten.

Die Firma Canon bietet Zwischenringe für Makrofotografie (Modellnummer:4250229900605) für ihre Kamera CANON EF EOS an. Die Zwischenringe können zwischen einer Einstellfassung und einem Objektivmount angeordnet werden und ermöglichen eine Verlängerung des Objektauszugs und damit eine Verschiebung der Naheinstellgrenze. Dies ermöglicht dem Anwender näher an das Motiv heranzugehen

CH 320 401 A (SCHNEIDER CO OPTISCHE WERKE [DE]) offenbart eine weitere Adaptereinrichtung.

Es ist daher die Aufgabe der Erfindung, eine Adaptereinrichtung zur Verfügung zu stellen, mit der ein Kameraobjektiv an seinem kameraseitigen Endbereich gezielt stufenlos verlängert und verkürzt werden kann.
Diese Aufgabe wird gelöst durch die Merkmale des **Anspruchs 1.**

Es ist eine weitere Aufgabe der Erfindung ein Kameraobjektiv zur Verfügung zu stellen, bei dem mit einfachen Mitteln eine Korrektur des Anlagemaßes, der sogenannten Back-Focus-Korrektur, ermöglicht wird, indem eine stufenlose Verstellung unter Beobachtung ermöglicht wird, damit die Optik der Einstellfassung auf die Bildebene einer Kamera fokussiert, während das Kameraobjektiv mit der Kamera verbunden ist.

Diese Aufgabe wird gelöst durch die Merkmale des **Anspruchs 7.**

Dabei umfasst ein Objektiv eine Einstellfassung deren Optik eine optische Achse definiert, einen Objektivmount und eine Adaptereinrichtung nach einem der vorangehenden Ansprüche zum stufenlos beabstandbaren Verbinden von der Einstellfassung mit dem Objektivmount.

Die Einstellfassung umfasst in bekannter Weise das mechanische Gehäuse mit der darin gefassten Optik. Zumindest eine Linse der Optik und/oder weitere Elemente können mittels Einstellelementen auf der optischen Achse verschiebbar angeordnet sein. Es können auch noch elektronische Bauteile in oder an der Einstellfassung vorgesehen sein, z.B. zum Verschieben von mindestens einer der Linsen

Die vorliegende Lösung ermöglicht einen sehr einfachen und kompakten Aufbau, der zudem deutlich kostengünstiger zu realisieren ist und aufgrund seiner Variabilität unterschiedliche Einsatzmöglichkeiten erlaubt. Als Einsatzmöglichkeiten ist beispielsweise die Verwendung bei Überwachungskameras, Filmkameras, Industrieapplikationen, u.a. in der Qualitätssicherung vorgesehen.

Mit der vorliegenden Erfindung kann der Abstand des optischen Systems eines Objektivs zur Bildebene einer Kamera verändert und somit ein zu großes oder zu kleines Anlagemaß ausgeglichen werden.

Da die Adaptereinrichtung von außen mit der Einstellfassung verbunden wird, kann die Einstellfassung in ihrem Inneren unverändert und unbeeinflusst von der Adaptereinrichtung bleiben.

Bei einem erfindungsgemäßen Objektiv, das Einstellfassung, Adaptereinrichtung und Objektivmount umfasst, kann bei zu kleinem Anlagemaß, also bei zu kleinem Abstand zwischen Kamerasensor und Anlagefläche, die Einstellfassung über die Adaptereinrichtung derart gegen den Objektivmount verdreht werden, dass dadurch ein Backfocus-Hub entsteht. D.h., das Objektiv wird an seinem kameraseitigen Ende länger und gleicht somit ein in Richtung optischer Achse zu kurzes Kameragehäuse derart aus, dass das Bild scharf auf dem Kamerasensor abgebildet werden kann.
Bei einem zu langen Kameragehäuse hingegen wird die Einstellfassung mittels der Adaptereinrichtung in entgegengesetzter Richtung gedreht und somit verkürzt sich der optische Weg.
Bei der erfindungsgemäßen Adaptereinrichtung wird eine Einstellfassung mit einem Objektivmount über einen Kupplungsring verbunden, welcher entweder zwei Gewinde mit Hub oder ein Gewinde mit Hub und eine Rastnut bzw. Rastlippe für eine rotatorische Lagerung aufweist. Eine Klemmung erfolgt hierbei über die radiale Reduktion / Beseitigung des Gewindespiels und/oder des Spiels zwischen Rastnut und Rastlippe. Dies wird vorzugsweise durch lokale Verformung an drei Punkten vorgenommen, eine andere Anzahl von Druckpunkten ist möglich.

Erfindungsgemäß stehen Einstellfassung und Objektivmount mit einem Klemmring als anpassungsfähiger, d.h. veränderlicher Einrichtung in Wirkverbindung. Die Krafteinspeisung in die elastisch verformbare Einrichtung kann beispielsweise über Gewindestifte, Schrauben, Schelle oder Spannzange erfolgen.

Das Prinzip lebt von der Veränderung des Spiels in den Gewinden. Dazu muss ein Gewinde im Durchmesser unveränderlich (starr) und das Gegenstück veränderlich (anpassungsfähig) sein. Solange Spiel in den Gewinden ist, drehen sich diese gegeneinander, sobald das Spiel weggenommen wird, drehen sie sich nicht mehr und bewegen sich auch axial nicht mehr gegeneinander, es entsteht eine spielfreie starre Verbindung. Damit ein Teil anpassungsfähig wird, muss es eine Verformung zulassen. Dies geschieht durch Schlitzen. Bei der erfindungsgemäßen Variante, bei der der Objektivmount gegen die Einstellfassung verdrehbar ist, ist kein Bedienelement, beispielsweise ein Drehring erforderlich. Dort wird die eine Klemmung gelöst und die andere fixiert und dann jeweils die Einstellfassung zum Objektivmount gedreht, wodurch dann der Backfocushub oder die azimutale Orientierung von Einstellfassung zu Objektivmount eingestellt wird.

Bei der erfindungsgemäßen Variante, bei der ein Backfocushub aber keine Verdrehung von Einstellfassung zu Objektivmount gewünscht ist, ist der Kupplungsring zum Drehen von außen erreichbar ausgebildet. Der Kupplungsring kann dabei selbst der Drehring sein oder es wird ein Drehelement, beispielsweise ein Drehring an ihm befestigt.

Bei einer Ausführungsform der Erfindung kann ein Gewinde mit Hub zwischen Kupplungsring und Objektivmount und eine rotatorische Lagerung, d.h., ein Gewinde ohne Steigung oder weitere Ausführungsformen einer rotatorischen Lagerung, zwischen Kupplungsring und Einstellfassung angebracht werden.

Bei einer weiteren Ausführungsform der Erfindung kann ein Gewinde mit Hub zwischen Kupplungsring und Einstellfassung und eine rotatorische Lagerung, d.h., ein Gewinde ohne Steigung oder weitere Ausführungsformen einer rotatorischen Lagerung,zwischen Kupplungsring und Objektivmount angebracht werden.

Bei einer weiteren Ausführungsform können beide Drehverbindungen einen Hub parallel zur optischen Achse des Objektivs ermöglichen.

Es kann in einer Ausführung der Erfindung bei der Adaptereinrichtung in einer Grundeinstellung eines Gewindes ein Hub in beiden Richtungen vorgehalten werden, so dass sowohl ein zu kurzes als auch zu langes Anlagemaß ausgeglichen werden kann.
Dabei kann das Gewinde zwischen Einstellfassung und Kupplungsring oder zwischen Kupplungsring und Objektivmount vorgesehen sein.
Sind beide Drehverbindungen mit Hub versehen, d.h. als Gewinde ausgebildet, so kann bei beiden Gewinden der Hub vorgehalten werden.

Die Gewinde können beispielsweise als Spitzgewinde oder Trapezgewinde ausgebildet sein.

Die Adapterreinrichtung umfasst zumindest einen Kupplungsring. Ein Kupplungsring kann beispielsweise aus eloxiertem Aluminium mit der benötigten Präzision und Festigkeit hergestellt werden. Es können aber auch Metalle, wie Messing, Bronze, Edelstahl oder geeignete Kunststoffe oder auch keramische Werkstoffe Verwendung finden.

Das Anlagemaß ist definiert als der Abstand zwischen kameraseitiger Anlagefläche des Objektivmounts und der Bildebene einer Kamera im montierten Zustand, das heißt, zu dem Zeitpunkt an dem die kameraseitige Anlagefläche des Objektivmounts an der korrespondierenden objektivseitigen Anlagefläche des Kameramounts anliegt.

Mit der Adaptereinrichtung können Maßtoleranzen im Anlagemaß ausgeglichen werden. Somit kann eine optimale Fokussierung der Optik der Einstellfassung auf die Bildebene der Kamera erzielt werden.

Unter Mount wird eine Anschlussverbindung zwischen Kamera und Einstellfassung eines Objektivs verstanden. Ein Mount umfasst einen ersten Teil, den Kameramount, und einen zweiten Teil, den Objektivmount. Die Anschlussverbindung kann beispielsweise als Anschlussgewinde oder als Bajonettverschluss ausgebildet sein. Bekannte Mounts sind beispielsweise der C-Mount, CS-Mount, PL-Mount, EF-Mount, F-Mount, K-Mount und Alpha-Mount.

Als Objektivmounts kann eine Vielzahl an unterschiedlichen Formen vorgesehen sein. Die Erfindung kann beispielsweise eingesetzt werden bei PL-Mounts, EF-Mounts, CS-Mounts, C-Mounts und sonstigen Mountformen.

Im montierten Zustand fallen die mechanische Achse von Einstellfassung, Adaptereinrichtung bzw. Kupplungsring, Objektivmount sowie Kameramount mit der optischen Achse der optischen Elemente der Einstellfassung des Kameraobjektivs zusammen.

In der erfindungsgemäßen Ausführungsform der Adaptereinrichtung ist die drehbare Verbindung zwischen Kupplungsring und Objektivmount hubfrei ausgebildet. Die drehbare Verbindung kann dabei als umlaufende Kerbe und in sie eingreifende Lippe ausgebildet sein. Die Lippe kann dabei geschlossen kreisförmig oder auch nur teilkreisförmig ausgebildet sein. Es können auch mehrere kreisförmige Kerben und Lippen vorgesehen sein, beispielsweise 2, 3, 4, 5, 6 oder mehr Kerben samt Lippen. Diese Kerben und Lippen können dabei separat und parallel zueinander ausgebildet sein. Dies führt zu einer gegen Verkippung stabileren Verbindung. Es sind auch andere Lager, bevorzugt V-förmige Lager vorstellbar, die eine Klemmung ermöglichen.

Diese Form der hubfreien Verbindung kann auch zwischen Einstellfassung und Kupplungsring vorgesehen sein. Dann aber ist die Drehverbindung zwischen Kupplungsring und Objektivmount mit Hub ausgebildet.

Einstellfassung und Objektivmount können auch zueinander geführt werden, z.B. über zueinander gerichtete zylindrische Flächen. Dies grenzt einen möglichen Querversatz der beiden Elemente ein. Alternativ oder zusätzlich können die beiden Flächen auch noch eine Führung, z.B. in Form einer Überlappung aufweisen.

Die Führung kann auch über den Kupplungsring erfolgen, d.h. sowohl die Einstellfassung, als auch der Objektivmount haben eine zylindrische Führung zum Kupplungsring, was den möglichen Versatz der Einstellfassung zum Objektivmount, welcher durch Toleranzen entstehen kann, begrenzt.

In einer weiteren erfindungsgemäßen Ausführungsform der Adaptereinrichtung sind mindestens eine Rastlippe und deren zugeordnete Rastnut hubfrei V-förmig ausgebildet. Das Bewegungsgewinde, beispielsweise das zusammenwirkende Einstellfassungs- und Kupplungsringgewinde, ist mit Gewindehub V-förmig ausgebildet. Dabei entspricht die V-Form der hubfreien Anordnung der V-Form der mit Hub ausgebildeten Anordnung.

In einer weiteren erfindungsgemäßen Ausführungsform kann die drehbare Verbindung zwischen Kupplungsring mit Objektivmount anstelle einer hubfreien Verbindung als Gewinde mit Hub ausgebildet sein. Werden bei dem Kupplungsring-Objektivmount-Gewinde und dem Einstellfassungs-Kupplungsring-Gewinde ungleiche Steigungen verwendet und haben die Steigungen der Gewinde den gleichen Drehsinn, so führt der Backfocus den Differenzhub der Steigungen aus. Somit lässt sich mit groben Gewinden eine beliebig feine resultierende Steigung erzeugen. Haben die Steigungen den entgegengesetzten Drehsinn, so führt der Backfocus den Summenhub der Steigungen aus.

Der Kupplungsring ist mit einem aufweitbaren Schlitz versehen. Der Schlitz ist bevorzugt radial, zumindest im Wesentlichen radial zur optischen Achse ausgebildet. Durch Aufweitung des Schlitzes kann die Rastlippe des Kupplungsrings in die entsprechende Rastnut, beispielsweise des Objektivmounts aufgeklemmt werden.

Der Kupplungsring kann beispielsweise von zwei Klemmringen umgeben sein. Mit den Klemmringen kann das Kupplungsringgewinde in das Einstellfassungsgewinde geklemmt werden. Durch die Klemmung wird gezielt eine Verdrehung von Kupplungsringgewinde und Einstellfassungsgewinde zueinander blockiert. Dabei werden bevorzugt drei Gewindestifte verwendet. Es können aber beispielsweise auch mehr 4, 5 oder 6 Gewindestifte vorgesehen sein. Die Gewindestifte sind bevorzugt in einem Abstand von 120° zueinander kreisförmig in dem Klemmring angebracht. Die Gewindestifte können soweit zum Kupplungsring eingeschraubt werden, dass das Innengewinde des Kupplungsrings (Kupplungsringgewinde) in das Außengewinde der Einstellfassung des Objektivs (Einstellfassungsgewinde, auch Objektivgewinde genannt) gedrückt wird und eine Verdrehung verhindert wird. Wird eine weitere Verdrehung gewünscht, so ist zumindest eine der drei Schrauben wieder etwas zu lösen.

Es kann auch nur ein Klemmring oder mehr als zwei Klemmringe vorgesehen sein. Werden die beiden Klemmringe zu einem Klemmring zusammengefasst so können die Gewindestifte mittig (3 x 120°) angeordnet werden. Somit kann die Verbindung des Kupplungsrings zur Einstellfassung und zum Objektivmount gleichzeitig hergestellt werden.

Um ein ungewolltes Verdrehen des Klemmrings gegenüber dem Kupplungsring zu verhindern, ist ein Verdrehschutz vorgesehen. Der Verdrehschutz kann beispielsweise als ein oder zwei Zylinderstifte ausgebildet sein. Diese Zylinderstifte greifen dann in den Schlitz des Kupplungsrings ein. Somit wird/werden der Klemmring/die Klemmringe immer mit dem Kupplungsring gemeinsam verdreht. Insbesondere sind die Zylinderstifte als Gewindestifte ausgeführt, die in entsprechende Gewinde in den Klemmring einschraubbar sind, um derart den Klemmring oder die Klemmringe am Kupplungsring festzulegen. Insbesondere sind drei äquidistant verteilt angeordnete Gewindestifte vorgesehen. Ein ungewolltes Eintauchen der Gewindestifte in den Schlitz wird somit unterbunden.

Die Klemmringe können beispielsweise aus Stahl oder Aluminium hergestellt werden.

Der Objektivmount kann beispielsweise aus Stahl, eloxiertem Aluminium oder verchromten Messing hergestellt werden.

Alternativ kann in einer nicht die Erfindung betreffenden Ausführungsform anstelle der als Klemmring ausgebildeten Klemmeinrichtung auch eine Schelle oder Spannzange als Klemmeinrichtung vorgesehen sein. Bei dieser Ausführungsform können die Gewindestifte und damit auch die Zylinderstifte wegfallen. Die Schelle kann über eine Schraube zusammen gezogen werden. In einer weiteren, nicht die Erfindung betreffenden Ausführungsform kann vorgesehen sein, dass anstelle des Klemmrings oder der Klemmringe ein gemeinsamer Überwurfvorschraubring vorgesehen ist.

In der erfindungsgemäßen Ausführungsform ist eine Verdrehsicherung zwischen Einstellfassung und Objektivmount vorgesehen sein. Diese Verdrehsicherung ist vorhanden, weil keine Rotation der Einstellfassung gegenüber dem Objektivmount gewünscht wird.

In einer weiteren erfindungsgemäßen Ausführungsform der Adaptereinrichtung ist ein geschlossener Kupplungsring mit zwei Gewinden vorgesehen. Dabei wirkt das erste Kupplungsringgewinde mit einem Gewinde eines ersten Klemmrings und das zweite Kupplungsringgewinde mit dem Gewinde eines zweiten Klemmrings zusammenwirkt. Für die rotatorische Lagerung ist eines der beiden zusammenwirkenden Gewinde hubfrei als Rastnut-Rastlippe-Verbindung ausgebildet. Das zweite zusammenwirkende Gewinde ist zur Erzeugung eines Backfocus-Hubs ausgebildet ist. Einer der beiden Klemmringe steht mit der Einstellfassung und der andere der beiden Klemmringe mit dem Objektivmount in Wirkverbindung. Zumindest der Klemmring für die rotatorische Lagerung ist geschlitzt. Es kann aber auch der zweite Klemmring geschlitzt sein. Auf die Klemmringe wirken Gewindestifte für eine lokale elastische Verformung. Die Gewindestifte sind in der Einstellfassung und im Objektivmount angeordnet.

In einer weiteren erfindungsgemäßen Ausführungsform der Adaptereinrichtung entspricht ihr Außendurchmesser dem Außendurchmesser des anzukoppelnden Objektivmounts und/oder dem Außendurchmesser des an die Adaptereinrichtung anliegenden Endbereichs der Einstellfassung. Dadurch ergibt sich ein konstanter Übergang von Einstellfassung und/oder Einstellfassung zu Objektivmount, der die Benutzung für den Benutzer erleichtert. Alternativ kann die Adaptereinrichtung auch leicht größer oder kleiner ausgebildet sein, so dass deren Außendurchmesser bis maximal 4 mm kleiner oder bis 10 mm größer als der Außendurchmesser des anzukoppelnden Objektivmounts ist.

In einer weiteren erfindungsgemäßen Ausführungsform beträgt die axiale Erstreckung der Adaptereinrichtung bevorzugt < 3 cm, besonders bevorzugt < 2 cm und ganz besonders bevorzugt < 1,5 cm. Somit weißt das Gesamtsystem "Objektiv mit Adaptereinrichtung-Kamera" nur eine sehr geringe Verlängerung, nämlich bevorzugt < 3 cm, besonders bevorzugt < 2 cm und ganz besonders bevorzugt < 1,5 cm im Vergleich zum System "Objektiv ohne Adaptereinrichtung-Kamera" auf. Somit wird nur ein schmales ringförmiges Bauteil für die erfindungsgemäße Backfocus-Einstellung zwischen Objektiv und Kamera benötigt.

Weitere vorteilhafte Ausführungsformen von Adaptereinrichtung und Objektiv sind in den abhängigen Ansprüchen angegeben.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine Kamera mit Objektiv nach dem Stand der Technik,
- Figur 2: die erfindungsgemäße Adaptereinrichtung,
- Figur 3: einen erfindungsgemäßen Klemmring und Kupplungsring,
- Figur 4: ein Bewegungsgewinde zwischen Einstellfassung und Kupplungsring,
- Figur 5: eine alternative erfindungsgemäße Adaptereinrichtung,
- Figur 6,: eine nicht erfindungsgemäße Adaptereinrichtung, und
- Figur 7: einen erfindungsgemäßen Klemmring und eine Einstellfassung.

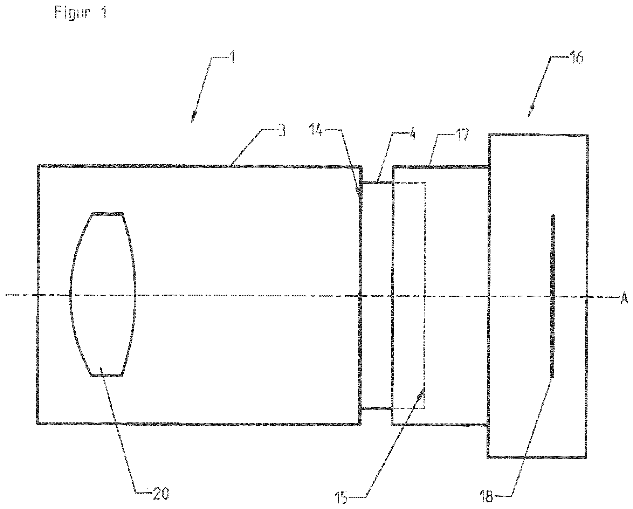

**Figur 1** zeigt schematisch, wie aus dem Stand der Technik bekannt, eine Kamera 16 mit einem Bildsensor 18 und einem Kameramount 17. Der Bildsensor 18 liegt in der Bildebene.

Ein Objektiv 1 umfasst eine Einstellfassung 3 mit einer Anlagefläche 14 und einen Objektivmount 4. In der Einstellfassung 3 ist schematisch eine Linse 20 angeordnet. Es ist selbstverständlich, dass in der Einstellfassung 3 eine Vielzahl an ortsfesten und bewegbaren optischen Elementen angeordnet sein können, die die optische Achse A definieren. Über zumindest einen nicht dargestellten Einstellring kann zumindest eines der optischen Elemente entlang der optischen Achse A bewegt werden.

Objektivmount 4 und Kameramount 17 sind gemeinsam als Bajonettverschluss ausgebildet. Der Abstand zwischen der Anlagefläche 15 des Objektivmounts 4 und der Bildebene des Kamerasensors wird als Anlagemaß bezeichnet.

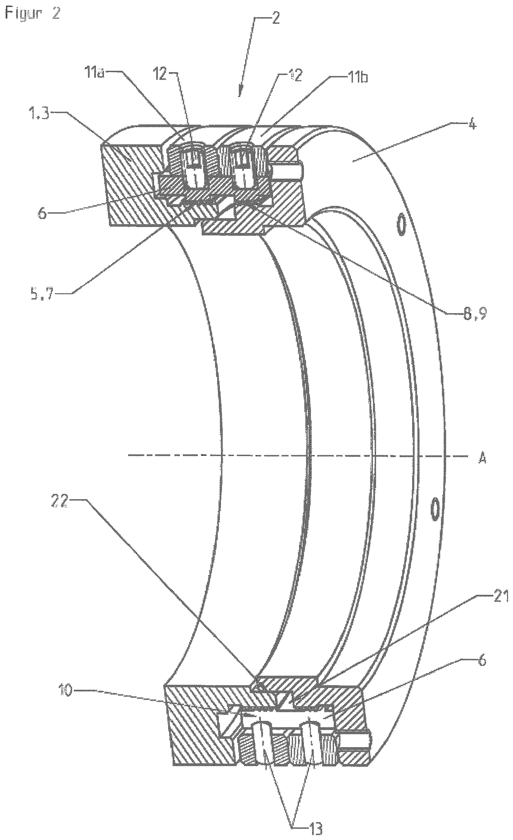

**Figur 2** zeigt schematisch die erfindungsgemäße Adaptereinrichtung 2. Dabei ist die Einstellfassung 3 des Objektivs 1 nur als ringförmiger Abschnitt dargestellt. Ebenso ist der Objektivmount 4 nur als ringförmiger Abschnitt dargestellt. Einstellfassung 3 und Objektivmount 4 werden über die Adaptereinrichtung 2 miteinander verbunden. Die Adaptereinrichtung 2 weist einen Kupplungsring 6 auf. Dieser ist mit einem Innengewinde 7 versehen, das in das Außengewinde 5 der Einstellfassung 3 eingreift. Es sind beispielsweise vier Umdrehungen vorgesehen. Es können auch mehr oder weniger Umdrehungen vorgesehen sein.

Das Gewinde 5, 7 hat eine Steigung, die eine ausreichend präzise Einstellung des Backfocus ermöglicht. Beispielsweise eine Steigung von 0,75.
Für eine feinfühlige Einstellung kann es sinnvoll sein, mit kleinen Steigungen, wie beispielsweise 0,5 oder 0,75 oder 1 zu arbeiten, das Hub zu Drehwinkel Verhältnis ist dann optimal. Es sind natürlich auch Steigungen in den Bereichen zwischen 0,5 und 0,75 bzw. 0,75 und 1 einsetzbar.
Die Drehwinkel werden möglichst groß gewählt, wobei man im Normalfall unter 360° bleiben wird, beispielsweise bei Drehwinkeln größer 290°, um sich die aufwändigeren Anschläge für größere Drehwinkel zu sparen. Nach Abzug der Anschläge werden in eine Ausführungsform beispielsweise Drehwinkel von ca. 300° - 350° erreicht.
Aus der Mittelstellung können sich somit Hübe von ca. ±0,2 bis ca. ±0,5 ergeben.

Zwischen Einstellfassung 3 und Objektivmount 4 ist ein Spalt 21, der durch den Kupplungsring 6 überbrückt wird und in seiner axialen Erstreckung entlang der optischen Achse A variierbar ist. Damit die Einstellfassung 3 zum Objektivmount 4 sehr genau zentriert ist, kann zwischen beiden eine zylindrische Führung 22 vorgesehen sein, welche die Backfocus-Bewegung zulässt.

Die Verbindung des Objektivmounts 4 zum Kupplungsring 6 ist als Lagerstelle in Form eines Gewindes aus Rastlippe 8 und Rastnut 9 ohne Steigung ausgebildet. D.h., der Kupplungsring 6 ist mit einer Rastlippe 8 versehen und der Objektivmount 4 mit einer Rastnut 9. Rastlippe 8 und Rastnut 9 können auch vertauscht werden. Damit der Kupplungsring 6 trotz der fehlenden Steigung des Gewindes 8, 9 montierbar ist, hat dieser einen Schlitz 10, der ein Aufschnappen durch elastisches Weiten des Kupplungsrings 6 ermöglicht. Um den Kupplungsring 6 sind zwei Klemmringe 11a und 11b angeordnet, in denen Gewindestifte, hier beispielsweise jeweils drei Gewindestifte 12, im Abstand von 120° äquidistant um den Umfang verteilt, eingeschraubt sind. Damit die Gewindestifte 12 nie in den Schlitz 10 eintauchen können, wird die Verdrehung der Klemmringe 11a und 11b zum Kupplungsring 6 durch eine Verdrehschutzeinrichtung, hier beispielsweise die Zylinderstifte 13, die in den Schlitz 10 eingreifen, verhindert.

Die Klemmung erfolgt durch lokale elastische Verformung der Klemmringe 11a und 11b durch Gewindestifte 12, welche in der Einstellfassung 3 und im Objektivmount 4 sitzen.

Gewindepaarungen weisen im ungefetteten Zustand üblicherweise ein Axialspiel von 0,005 bis 0,1 auf, das Radialspiel ist entsprechend dem Gewindeprofil ähnlich. Im gefetteten Zustand ist dieses Spiel nicht mehr oder kaum noch spürbar, die Teile bewegen sich aber verhältnismäßig leichtgängig gegeneinander. Beim Klemmen wird das Spiel so weit reduziert, dass eine Bewegung zueinander nicht mehr möglich ist. Dazu wird das Fett lokal (bis auf einen feinen Restfilm) verdrängt.

Durch die Gewindestifte 12 kann das Spiel in den Gewinden 5,7 und 8,9 soweit verändert werden, dass eine präzise Justage des Backfocus möglich wird. Werden am Ende der Justage die Gewindestifte 12 noch weiter gedreht, so ist eine Verdrehung von Kupplungsring 6 zu Einstellfassung 3 und Objektivmount 4 nicht mehr möglich, Einstellfassung 3 und Objektivmount 4 sind dann auch unter Belastung spielfrei miteinander verbunden. Durch eine Reduzierung des Axialspiels und des Radialspiels auf Null kann jegliche Beweglichkeit eliminiert werden. Dadurch wird eine unbeabsichtigte Relativbewegung der Optik zur Kamera verhindert.

In der Figur 2 nicht zu sehen ist ein Anschlag, der den Hub des Backfocus auf einen zulässigen Wert begrenzen kann und somit auch ein Herausdrehen des Kupplungsrings 6 vom Objektiv 1 verhindern kann.

Die Einstellprozedur der dargestellten Anordnung kann erfolgen, indem die rotatorische Lagerung 8, 9 durch Klemmring 11b zunächst geklemmt wird. Die Einstellfassung 3 wird gegen den Rest der Anordnung verdreht, dadurch entsteht der Backfocus-Hub. Dadurch verdrehen sich allerdings auch die auf dem Objektiv 1 befindlichen Skalen und sonstigen Markierungen (hier nicht dargestellt). Dann wird das Gewinde 5, 7 durch Klemmring 11a geklemmt und die Drehung der rotatorischen Lagerung 8, 9 ermöglicht. Dadurch wird die Ablesung der auf dem Objektiv 1 befindlichen Skalen und Markierungen in einer beliebig wählbaren Stellung ermöglicht. Anschließend wird auch die rotatorische Lagerung 8,9 geklemmt und das System ist betriebsbereit.

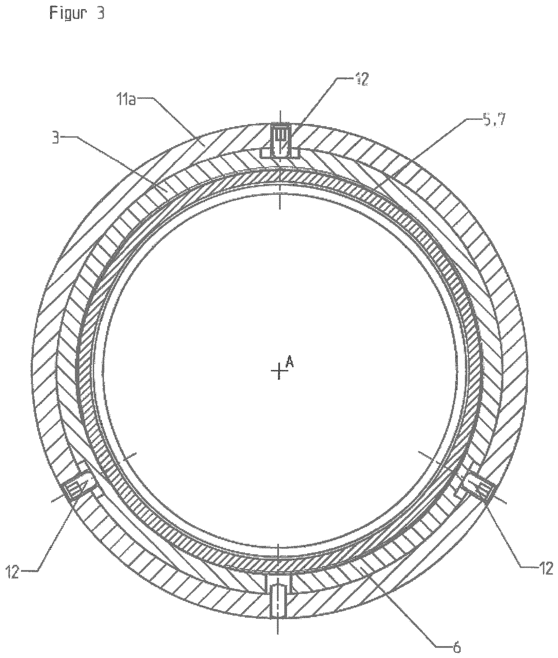

**Figur 3** zeigt schematisch einen erfindungsgemäßen Klemmring 11a und Kupplungsring 6. Der Klemmring 11a ist mit drei Gewindestiften 12 versehen, mit denen auf den Kupplungsring 6 Druck ausgeübt werden kann. Das Innengewinde 7 des Kupplungsrings kann somit derart in das Außengewinde 5 der Einstellfassung gedrückt werden, dass ein Verdrehen blockiert wird.

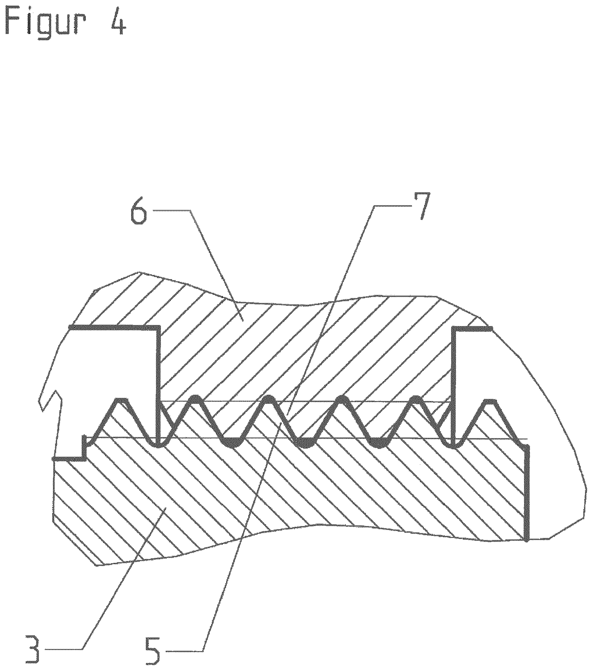

**Figur 4** zeigt schematisch einen Ausschnitt der Einstellfassung 3 mit V-förmigen Außengewinde 5 und des Kupplungsrings 6 mit V-förmigem Innengewinde 7. Über die hier nicht dargestellten Klemmringe 11a, 11b kann das Spiel eingestellt bzw. ein Verdrehen der Einstellfassung 3 relativ zum Kupplungsring 6 unterbunden werden.

Rastlippe 8 und Rastnut 9 können die gleiche V-Form aufweisen, wie das Außengewinde 5 und das Innengewinde 7. Rastlippe 8 und Rastnut 9 können als hubfreies Gewinde aufgefasst werden.

Der Teil der Einstellfassung 3 mit dem Außengewinde 5 kann einstückig ausgebildet sein. Es ist aber auch vorstellbar, den Teil mit dem Außengewinde 5 nachrüstbar auszubilden. Er könnte dann mit der Einstellfassung 3 beispielsweise verschraubbar oder verklebbar sein. Ebenso kann der Teil des Objektivmounts 4 mit dem der Rastlippe 8 oder Rastnut 9 einstückig ausgebildet sein oder erst nachträglich befestigbar sein.

Es ist zudem vorstellbar den Hub zu begrenzen, um ein unbeabsichtiges Auseinandergehen des Gewindes 5, 7 zu verhindern. Hierzu kann eine Begrenzungseinrichtung, beispielsweise in Form einer Nase am Kupplungsring 6 und einer den Weg der Nase blockierenden Schraube an der Einstellfassung 3 vorgesehen sein.

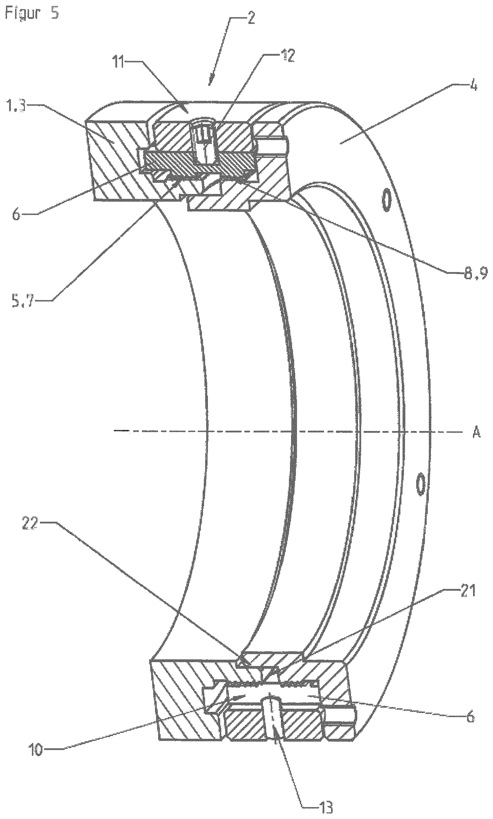

**Figur 5** zeigt schematisch die erfindungsgemäße Adaptereinrichtung 2. Der Unterschied zu Figur 2 liegt darin, dass es hier nur einen Klemmring 11 gibt, welcher über drei Gewindestifte 12 auf den Kupplungsring 6 drückt, wodurch das Spiel an den Gewinden 5,7 und 8,9 gleichzeitig verringert wird und auch die Klemmung gleichzeitig erfolgt. Diese Anordnung ist insbesondere dann von Interesse, wenn Einstellfassung 3 und Objektivmount 4 aus Gründen der Bedienbarkeit gegeneinander verdrehgesichert sind. In diesem Fall dient der Klemmring 11 dem Nutzer als Drehring zum Einstellen des Anlagemaßes.

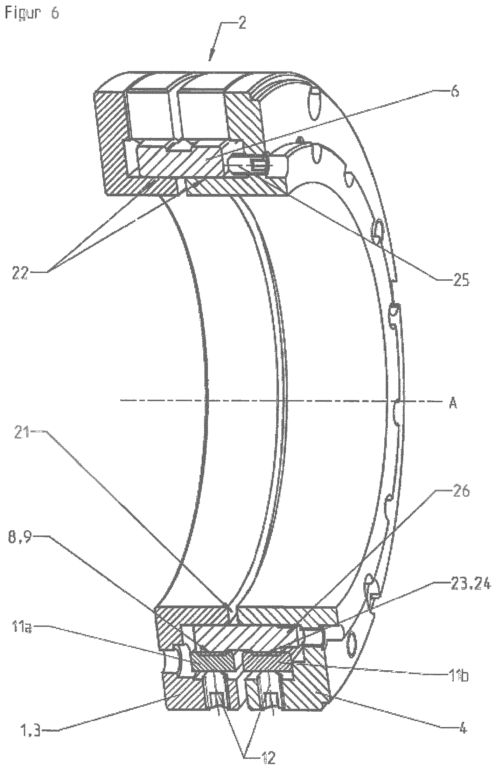

**Figur 6** zeigt eine nicht erfindungsgemäße Adaptereinrichtung 2. Der Kupplungsring 6 ist hier ein geschlossener Ring, welcher auf der einen Seite ein Außengewinde bzw. die Rastnut 9 und auf der anderen Seite das Kupplungsringgewinde 23 (Außengewinde) trägt. Der Klemmring 11a trägt ein Innengewinde bzw. die Rastlippe 8 und ist mit der Einstellfassung 3 verbunden, beispielsweise punktuell verbunden. Der Klemmring 11b trägt das Klemmringgewinde 24 (Innengewinde) und ist mit dem Objektivmount 4 verbunden, beispielsweise punktuell verbunden. Die Gewindestifte 12, hier beispielweise jeweils 3x120° angeordnet, befinden sich in der Einstellfassung 3 und dem Objektivmount 4.

Die Klemmringe 11a und 11b sind geschlitzt ausgebildet, damit ihr Grundspiel zum Kupplungsring einstellbar ist und beim Klemmring mit Steigung 0 eine Montage möglich ist.

Durch Anziehen der Gewindestifte 12 wird das Gewinde 8 des Klemmrings 11a in das Gewinde 9 des Kupplungsrings 6 bzw. das Gewinde 24 des Klemmrings 11b in das Gewinde 23 des Kupplungsrings 6 gedrückt und damit die Klemmverbindung hergestellt. Wird die Gewindeverbindung 23,24 gelöst, so verändert eine Verdrehung der Einstellfassung 3 zum Objektivmount 4 den Spalt 21 und damit das Anlagemaß. Dies ist die Backfocus-Funktion der Einrichtung. Wird die Gewindeverbindung 8,9 gelöst, so verändert eine Verdrehung der Einstellfassung 3 zum Objektivmount 4 nur deren azimutale Lage zueinander, da die Gewindeverbindung 8, 9 hubfrei ausgebildet ist. Durch diese rotatorische Lagerung wird eine beliebige Indexlage des Kameraobjektivs 1 zur Kamera 16 ermöglicht.

Auf den Objektiven sind Skalen für Fokus, Blende und gegebenfalls Zoom angebracht, die jeweils am Index, also dem feststehenden Strich, abgelesen werden. Bei Photoobjektiven ist die Indexlage üblicherweise oben, bei Cineobjektiven links und rechts, um die Skalen in der Gebrauchslage ablesen zu können. Bei technischen Objektiven werden die Kameras mit den Objektiven in Maschinen oder Gehäusen verbaut, in denen die Objektivskalen nicht unbedingt von oben oder von der Seite abgelesen werden können. In diesen Fällen ist es vorteilhaft, das Objektiv gegen die Kamera in eine beliebige Lage drehen zu können.

Die Zentrierung von Einstellfassung 3 zu Kameramount 4 erfolgt in der Darstellung nicht direkt zueinander, sondern über den Kupplungsring 6 an den zylindrischen Führungen 22. Dies hat den Vorteil, dass die Klemmungen sich nicht gegenseitig beeinflussen, sondern absolut unabhängig voneinander arbeiten.

In der Darstellung ist auch der Anschlag zu erkennen, welcher die Endlagen für die Schraubbewegung des Backfocus definiert. Im vorliegenden Beispiel schlägt eine segmentförmige Anschlagnase 26 von beiden Seiten gegen die Anschlagschraube 25.

Im vorliegenden Beispiel kann die äußere und innere Begrenzung des Anschlags die durch Drehbearbeitung erzeugte Zylinderfläche sein. Diese Kontur wird durch Fräsbearbeitung größtenteils entfernt, das übriggebliebene Material hat die Form eines Segments, also eines Teilstücks des Zylinders.

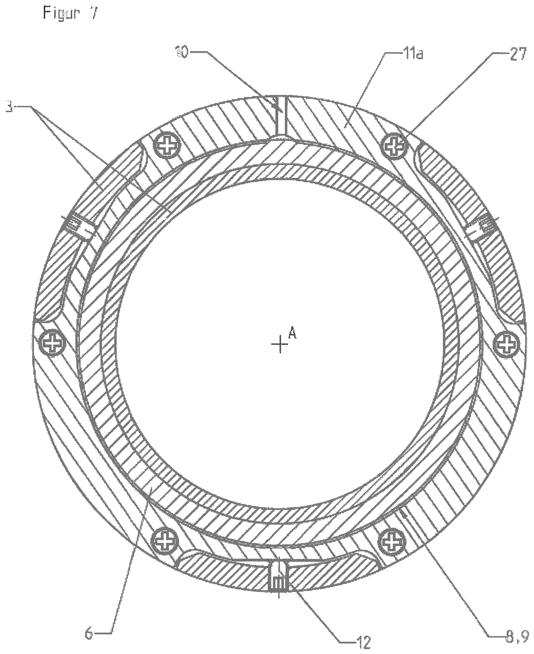

**Figur 7** zeigt schematisch einen erfindungsgemäßen Klemmring 11a und eine Einstellfassung 3, welche über sechs Schrauben 27 miteinander verbunden sind. Dieser kann beispielsweise in der Ausführungsform nach Figur 6 Verwendung finden. Der Klemmring 11a ist über das Gewinde 8,9 mit dem Kupplungsring 6 im Eingriff. Der Kupplungsring ist in diesem Beispiel massiv, d.h. ungeschlitzt ausgebildet. Durch Anziehen der drei Gewindestifte 12 wird der Klemmring jeweils zwischen 2 Schrauben 27 im Bereich der Druckstelle elastisch verformt und damit das Spiel bis zum Klemmen eliminiert. D.h. die dünnwandigen Stege werden durch die Gewindestifte geringfügig in Richtung des Kupplungsrings elastisch verbogen, wodurch die Klemmung erfolgt. Somit ist eine unabhängige Einstellung des Backfocus und der Indexlage möglich. Am Ende kann die Klemmung erfolgen, wodurch eine präzise und feste Verbindung zwischen Objektivmount und Einstellfassung entsteht.

Generell gilt, dass drei Punkte sind gut sind, um eine räumlich definierte Klemmung zu ermöglichen, zwei Punkte sind auch möglich aber nicht optimal, weil sie nur eine Achse definieren. Eine Klemmung an nur einem Punkt wäre auch denkbar, aber noch ungünstiger als eine Zweipunktklemmung. Es wäre auch eine Klemmung an 4 Punkte oder mehr Punkten vorstellbar, was aber eine Überbestimmtheit bedeuten würde.

Der Schlitz 10 ermöglicht zum einen die Montage des Klemmrings 11a durch leichtes elastisches Öffnen, da dieser mit seinem Gewinde ohne Steigung oder Rastnut / Rastlippe sonst nicht montierbar wäre. Er ermöglicht aber auch durch kontrollierte Verengung die Einstellung eines Grundspiels im Gewinde 8,9.

Klemmring 11b, Kupplungsring 6 und Objektivmount 4 sind in gleicher Form miteinander verbunden, weisen aber einen Hub auf. Sie sind genauso justierbar und klemmbar.Auch Klemmring 11b kann mit einem Schlitz versehen sein. Eine solche Schlitzung der Klemmringe ermöglicht eine Voreinstellung des Spiels.

Wenn auf eine Vorjustage des Gewindespiels verzichtet werden kann, ist es auch denkbar, Klemmring 11b und Objektivmount 4 aus einem Stück zu fertigen. Die für die elastische Verformung erforderliche Beweglichkeit könnte durch gefräste oder erodierte Schlitze erreicht werden. Auch eine generative Fertigung der Teile ist denkbar.

Alternativ können die hubfreie Verbindung 8,9 und die Verbindung mit Hub ausgetauscht werden.

### Bezugszeichenliste

- 1: Kameraobjektiv
- 2: Adaptereinrichtung
- 3: Einstellfassung
- 4: Objektivmount
- 5: Einstellfassungsgewinde, Außengewinde
- 6: Kupplungsring
- 7: Kupplungsringgewinde, Innengewinde
- 8: Rastlippe
- 9: Rastnut, Kerbe
- 10: Schlitz
- 11a,b: Klemmringe
- 12: Gewindestifte
- 13: Verdrehschutz, Zylinderstifte
- 14: Anlagefläche der Einstellfassung
- 15: Anlagefläche des Objektivmounts
- 16: Kamera
- 17: Kameramount
- 18: Sensor, Bildebene
- 20: Linse
- 21: Spalt
- 22: zylindrische Führung
- 23: Kupplungsringgewinde, Außengewinde
- 24: Klemmringgewinde, Innengewinde
- 25: Anschlagschraube
- 26: Anschlagnase
- 27: Schraube
- A: optische Achse

## Patentansprüche

1. Adaptereinrichtung (2) zur Verbindung einer Einstellfassung (3) eines Objektivs (1) mit einem Objektivmount (4); mit einem Kupplungsring (6), der zur Ausbildung einer ersten Drehverbindung mit der Einstellfassung (3) und einer zweiten Drehverbindung mit dem Objektivmount (4) ausgebildet ist, wobei zumindest eine der beiden Drehverbindungen zur Herstellung eines Hubs parallel zur optischen Achse des Objektivs (1) ausgebildet ist, **dadurch gekennzeichnet, dass** wenigstens ein Klemmring (11, 11a, 11b) vorgesehen ist, der zur Herstellung einer Verdrehsicherung von Kupplungsring (6) gegen Objektivmount (4) und/oder Einstellfassung (3) ausgebildet ist, dass ein Verdrehschutz zur Verhinderung eines ungewollten Verdrehens des wenigstens einen Klemmrings (11, 11a, 11b) gegenüber dem Kupplungsring vorgesehen ist, dass eine der beiden Drehverbindungen hubfrei ausgebildet ist, und dass der Kupplungsring (6) mit einem aufweitbaren Schlitz (10) versehen ist.

2. Adaptereinrichtung (2) nach Anspruch 1, **dadurch gekennzeichnet, dass** die drehbare Verbindung zwischen Kupplungsring (6) und Objektivmount (4) hubfrei ausgebildet ist.

3. Adaptereinrichtung (2) nach einem der vorangehenden Ansprüche, **dadurch gekennzeichnet, dass** dem Kupplungsring (6) ein Klemmring (11, 11a, 11b) oder zwei in Axialrichtung (A) nebeneinander angeordnete Klemmringe (11a, 11b) zugeordnet sind.

4. Adaptereinrichtung (2) nach Anspruch 3, **dadurch gekennzeichnet, dass** an dem Klemmring oder an den Klemmringen (IIa, IIb) Gewindestifte (12) zur lösbaren Klemmung des Kupplungsringgewindes (7) in das oder die zugeordneten Gegengewinde, beispielsweise das Einstellfassungsgewinde (5) vorgesehen sind, insbesondere drei Gewindestifte (12), die vorzugsweise äquidistant verteilt angeordnet sind.

5. Adaptereinrichtung (2) nach einem der vorangehenden Ansprüche 3 bis 4, **dadurch gekennzeichnet, dass** der Klemmring als Schelle oder Spannzange ausgebildet ist.

6. Adaptereinrichtung (2), nach einem der vorangehenden Ansprüche, **dadurch gekennzeichnet, dass** ihre axiale Erstreckung < 3 cm, bevorzugt < 2 cm und besonders bevorzugt < 1,5 cm beträgt

7. Objektiv (1) umfassend eine Einstellfassung (3) mit optischen Elementen, die eine optische Achse (A) definieren, einen Objektivmount (4) und eine Adaptereinrichtung (2) nach einem der vorangehenden Ansprüche zum stufenlos beabstandbaren Verbinden der Einstellfassung (3) mit dem Objektivmount (4).

8. Objektiv (1) nach Anspruch 7, **dadurch gekennzeichnet, dass** Einstellfassung (3) und Objektivmount (4) Führungsflächen (14, 15) zur gegenseitigen Anlage aufweisen.

9. Objektiv (1) nach Anspruch 8, **dadurch gekennzeichnet, dass** als erste Drehverbindung an der Einstellfassung (3) ein Einstellfassungsgewinde (5) und an dem Kupplungsring (5) ein Kupplungsringgewinde (7) ausgebildet ist, welche zur axialen Verlagerung des Objektivs (1) entlang dessen optischer Achse (A) relativ zu dem Kupplungsring (6) ineinandergreifen und als zweite Drehverbindung zur drehbaren Verbindung von Kupplungsring (6) mit dem Objektivmount (4) zumindest eine Rastlippe (8) und zumindest eine entsprechende Rastnut (9), die miteinander in Eingriff bringbar sind.

10. Objektiv (1) nach Anspruch 8, **dadurch gekennzeichnet, dass** als erste Drehverbindung an dem Objektivmount (4) ein Gewinde und an dem Kupplungsring (6) ein Kupplungsringgewinde (7) ausgebildet ist, welche zur axialen Verlagerung des Objektivs (1) entlang dessen optischer Achse (A) relativ zu dem Kupplungsring (6) ineinandergreifen und als zweite Drehverbindung zur drehbaren Verbindung von Kupplungsring (6) und Einstellfassung (3) zumindest eine Rastlippe (8) und zumindest eine entsprechende Rastnut (9) in Eingriff bringbar sind.

11. Objektiv (1) nach einem der Ansprüche 9 oder 10, **dadurch gekennzeichnet, dass** die Rastlippe (8) und die Rastnut (9) sowie die Gewinde mit Hub, insbesondere das Einstellfassungs- und Kupplungsringgewinde, V-förmig ausgebildet sind.

12. Objektiv (1) nach einem der vorangehenden Ansprüche,
**dadurch gekennzeichnet, dass** die drehbare Verbindung zwischen Kupplungsring (6) und Objektivmount (4) als Gewinde mit Hub ausgebildet ist.

13. Objektiv (1) nach einem der vorangehenden Ansprüche,
**dadurch gekennzeichnet, dass** ihr Außendurchmesser dem Außendurchmesser des anzukoppelnden Objektivmounts entspricht oder einen Außendurchmesser aufweist, der bis maximal 4 mm kleiner oder bis maximal 10 mm größer als der Außendurchmesser des anzukoppelnden Objektivmounts ist.

14. Objektiv (1) nach einem der vorangehenden Ansprüche,
**dadurch gekennzeichnet, dass** ein geschlossener Kupplungsring (6) mit zwei Gewinden vorgesehen ist, wobei das erste Kupplungsringgewinde mit einem Gewinde eines ersten Klemmrings (11a) und das zweite Kupplungsringgewinde mit dem Gewinde eines zweiten Klemmrings (11b) zusammenwirkt, wobei für die rotatorische Lagerung eines der beiden zusammenwirkenden Gewinde hubfrei als Rastnut-Rastlippe-Verbindung und das zweite zusammenwirkende Gewinde zur Erzeugung des Backfocus-Hubs ausgebildet ist, wobei einer der beiden Klemmringe (11a, 11b) mit der Einstellfassung und der andere der beiden Klemmringe (11a, 11b) mit dem Objektivmount in Wirkverbindung steht und zumindest der Klemmring für die rotatorische Lagerung geschlitzt ist und auf die Klemmringe Gewindestifte für eine lokale elastische Verformung wirken, die in der Einstellfassung und im Objektivmount angeordnet sind.

## Claims

1. Adapter device (2) for connecting a focussing mount (3) of a lens (1) to a lens mount (4), with a coupling ring (6) which is designed to form a first rotational connection to the focussing mount (3) and a second rotational connection to the lens mount (4), wherein at least one of the two rotational connections is designed to produce a travel parallel to the optical axis of the lens (1), **characterized in that** at least one clamping ring (11, 11a, 11b) is provided which is designed to produce a rotational securing of the coupling ring (6) relative to the lens mount (4) and/or focussing mount (3), **in that** an anti-rotation means is provided for preventing an unwanted rotation of the at least one clamping ring (11, 11a, 11b) with respect to the coupling ring, **in that** one of the two rotational connections is designed to be free from travel, and **in that** the coupling ring (6) is provided with an expandable slit (10).

2. Adapter device (2) according to Claim 1, **characterized in that** the rotatable connection between coupling ring (6) and lens mount (4) is designed to be free from travel.

3. Adapter device (2) according to one of the preceding claims, **characterized in that** coupling ring (6) is assigned a clamping ring (11, 11a, 11b) or is assigned two clamping rings (11a, 11b) arranged next to each other in the axial direction (A).

4. Adapter device (2) according to Claim 3, **characterized in that** threaded pins (12) for releasably clamping the coupling ring thread (7) into the one or more associated counter-threads, for example the focussing mount thread (5), are provided on the clamping ring or on the clamping rings (11a, 11b), in particular three threaded pins (12), which are preferably distributed equidistant from one another.

5. Adapter device (2) according to one of the preceding claims, **characterized in that** the clamping ring is designed as a clip or collect chuck.

6. Adapter device (2) according to one of the preceding claims, **characterized in that** its axial extent is < 3 cm, preferably < 2 cm, and particularly preferably < 1.5 cm.

7. Lens (1) comprising a focussing mount (3), with optical elements which define an optical axis (A), a lens mount (4), and an adapter device (2) according to one of the preceding claims for steplessly adjustable connection of the focussing mount (3) to the lens mount (4).

8. Lens (1) according to Claim 7, **characterized in that** focussing mount (3) and lens mount (4) have guide surfaces (14, 15) for contact with each other.

9. Lens (1) according to Claim 8, **characterized in that**, as first rotational connection, a focussing mount thread (5) is formed on the focussing mount (3) and a coupling ring thread (7) is formed on the coupling ring (5), which threads engage in each other for axial displacement of the lens (1) along the optical axis (A) thereof relative to the coupling ring (6), and, as second rotational connection, at least one locking lip (8) and at least one corresponding locking groove (9) can be brought into engagement with each other for the rotatable connection of coupling ring (6) and lens mount (4).

10. Lens (1) according to Claim 8, **characterized in that**, as first rotational connection, a thread is formed on the lens mount (4) and a coupling ring thread (7) is formed on the coupling ring (6), which threads engage in each other for axial displacement of the lens (1) along the optical axis (A) thereof relative to the coupling ring (6), and, as second rotational connection, at least one locking lip (8) and at least one corresponding locking groove (9) can be brought into engagement for the rotatable connection of coupling ring (6) and focussing mount (3) .

11. Lens (1) according to either of Claims 9 and 10, **characterized in that** the locking lip (8) and the locking groove (9) and also the threads with travel, in particular the focussing mount thread and coupling ring thread, are V-shaped.

12. Lens (1) according to one of the preceding claims, **characterized in that** the rotatable connection between coupling ring (6) and lens mount (4) is designed as a thread with travel.

13. Lens (1) according to one of the preceding claims, **characterized in that** its external diameter corresponds to the external diameter of the lens mount to be coupled or has an external diameter which is at most 4 mm smaller or at most 10 mm larger than the external diameter of the lens mount to be coupled.

14. Lens (1) according to one of the preceding claims, **characterized in that** a closed coupling ring (6) with two threads is provided, wherein the first coupling ring thread interacts with a thread of a first clamping ring (11a) and the second coupling ring thread interacts with the thread of a second clamping ring (11b), wherein one of the two interacting threads for the rotary bearing is designed free of travel as a locking groove/locking lip connection and the second interacting thread is designed to generate the back focus travel, wherein one of the two clamping rings (11a, 11b) is operatively connected to the focussing mount and the other of the two clamping rings (11a, 11b) is operatively connected to the lens mount, and at least the clamping ring for the rotary bearing is slit, and threaded pins for local elastic deformation, which are arranged in the focussing mount and in the lens mount, act on the clamping rings.

## Revendications

1. Dispositif adaptateur (2) pour la connexion d'une monture d'ajustement (3) d'un objectif (1) à un support d'objectif (4), comprenant une bague d'accouplement (6) qui est réalisée pour établir une première connexion rotative avec la monture d'ajustement (3) et une deuxième connexion rotative avec le support d'objectif (4), au moins l'une des deux connexions rotatives étant réalisée pour établir une course parallèlement à l'axe optique de l'objectif (1), **caractérisé en ce qu'**au moins une bague de serrage (11, 11a, 11b) est prévue, laquelle est réalisée pour établir une fixation en rotation de la bague d'accouplement (6) par rapport au support d'objectif (4) et/ou par rapport à la monture d'ajustement (3), **en ce qu'**une protection antirotation, pour empêcher une rotation indésirable de l'au moins une bague de serrage (11, 11a, 11b) par rapport à la bague d'accouplement, est prévue, **en ce que** l'une des deux connexions rotatives est réalisée sans course et **en ce que** la bague d'accouplement (6) est pourvue d'une fente pouvant être élargie (10).

2. Dispositif adaptateur (2) selon la revendication 1, **caractérisé en ce que** la connexion rotative entre la bague d'accouplement (6) et le support d'objectif (4) est réalisée sans course.

3. Dispositif adaptateur (2) selon l'une quelconque des revendications précédentes, **caractérisé en ce qu'**une bague de serrage (11, 11a, 11b) ou deux bagues de serrage (11a, 11b) disposées l'une à côté de l'autre dans la direction axiale (A) sont associées à la bague d'accouplement (6).

4. Dispositif adaptateur (2) selon la revendication 3, **caractérisé en ce que** des goupilles filetées (12) pour le serrage amovible du filetage de la bague d'accouplement (7) dans le ou les filetages conjugués associés, par exemple le filetage de la monture d'ajustement (5), sont prévues au niveau de la bague de serrage ou au niveau des bagues de serrage (IIa, IIb), en particulier trois goupilles filetées (12), qui sont disposées de manière répartie de préférence de manière équidistante.

5. Dispositif adaptateur (2) selon l'une quelconque des revendications précédentes 3 et 4, **caractérisé en ce que** la bague de serrage est réalisée sous forme de collier de serrage ou de pince de serrage.

6. Dispositif adaptateur (2) selon l'une quelconque des revendications précédentes, **caractérisé en ce que** son étendue axiale est inférieure à 3 cm, de préférence inférieure à 2 cm et particulièrement préférablement inférieure à 1,5 cm.

7. Objectif (1) comprenant une monture d'ajustement (3) avec des éléments optiques qui définissent un axe optique (A), un support d'objectif (4) et un dispositif adaptateur (2) selon l'une quelconque des revendications précédentes pour connecter, de manière déplaçable en continu, la monture d'ajustement (3) avec le support d'objectif (4).

8. Objectif (1) selon la revendication 7, **caractérisé en ce que** la monture d'ajustement (3) et le support d'objectif (4) présentent des surfaces de guidage (14, 15) pour un appui mutuel.

9. Objectif (1) selon la revendication 8, **caractérisé en ce qu'**un filetage de monture d'ajustement (5) est réalisé en tant que première connexion rotative au niveau de la monture d'ajustement (3) et un filetage de bague d'accouplement (7) est réalisé au niveau de la bague d'accouplement (5), lesquels filetages viennent en prise l'un dans l'autre pour le déplacement axial de l'objectif (1) le long de son axe optique (A) par rapport à la bague d'accouplement (6), et au moins une lèvre d'encliquetage (8) et au moins une rainure d'encliquetage correspondante (9), qui peuvent être amenées en prise l'une avec l'autre, sont réalisées en tant que deuxième connexion rotative pour la connexion rotative de la bague d'accouplement (6) avec le support d'objectif (4).

10. Objectif (1) selon la revendication 8, **caractérisé en ce qu'**un filetage est réalisé en tant que première connexion rotative avec le support d'objectif (4) et un filetage de bague d'accouplement (7) est réalisé au niveau de la bague d'accouplement (6), lesquels filetages viennent en prise l'un dans l'autre pour le déplacement axial de l'objectif (1) le long de son axe optique (A) par rapport à la bague d'accouplement (6), et au moins une lèvre d'encliquetage (8) et au moins une lèvre d'encliquetage correspondante (9) peuvent être amenées en prise en tant que deuxième connexion rotative pour la connexion rotative de la bague d'accouplement (6) et de la monture d'ajustement (3) .

11. Objectif (1) selon l'une quelconque des revendications 9 et 10, **caractérisé en ce que** la lèvre d'encliquetage (8) et la rainure d'encliquetage (9) ainsi que les filetages sont réalisés avec une course, en particulier les filetages de la monture d'ajustement et de la bague d'accouplement sont réalisés en forme de V.

12. Objectif (1) selon l'une quelconque des revendications précédentes, **caractérisé en ce que** la connexion rotative entre la bague d'accouplement (6) et le support d'objectif (4) est réalisée sous forme de filetage avec course.

13. Objectif (1) selon l'une quelconque des revendications précédentes, **caractérisé en ce que** son diamètre extérieur correspond au diamètre extérieur du support d'objectif à accoupler ou présente un diamètre extérieur qui est inférieur de 4 mm au maximum ou supérieur de 10 mm au maximum au diamètre extérieur du support d'objectif à accoupler.

14. Objectif (1) selon l'une quelconque des revendications précédentes, **caractérisé en ce qu'**une bague d'accouplement fermée (6) est pourvue de deux filetages, le premier filetage de bague d'accouplement coopérant avec un filetage d'une première bague de serrage (11a) et le deuxième filetage de bague d'accouplement coopérant avec le filetage d'une deuxième bague de serrage (11b), pour le support en rotation, l'un des deux filetages coopérants étant réalisé sans course en tant que connexion à rainure d'encliquetage et lèvre d'encliquetage, et le deuxième filetage coopérant étant réalisé pour générer la course de tirage optique, l'une des deux bagues de serrage (11a, 11b) étant en liaison fonctionnelle avec la monture d'ajustement et l'autre des deux bagues de serrage (11a, 11b) étant en liaison fonctionnelle avec le support d'objectif et au moins la bague de serrage pour le support en rotation étant fendue et des goupilles filetées agissant sur les bagues de serrage pour une déformation élastique locale, lesquelles sont disposées dans la monture d'ajustement et dans le support d'objectif.
